# EUROPÄISCHE PATENTSCHRIFT

(11) **EP 0 510 220 B1**
(45) Veröffentlichungstag und Bekanntmachung des Hinweises auf die Patenterteilung: **04.12.1996**
(21) Anmeldenummer: 91106526.6
(22) Anmeldetag: 23.04.1991
(51) Int. Cl.: G06K 7/08

(54) **Einrichtung zur berührungslosen Daten- und Energieübertragung**
Non-contact data and energy transmission device
Dispositif de transmission d'énergie et de données sans contact

(43) Veröffentlichungstag der Anmeldung: 28.10.1992
(73) Patentinhaber: SIEMENS AKTIENGESELLSCHAFT, 80333 München (DE)
(72) Erfinder: Scheckel, Bruno, W-8017 Ebersberg (DE); Reiner, Robert, W-8025 Unterhaching (DE)

(56) Entgegenhaltungen:
- EP-A- 0 309 201
- DE-A- 3 412 610
- US-A- 4 924 171
- PATENT ABSTRACTS OF JAPAN Band 12, Nr. 192 (P- 712)(3039), 4. Juni 1988; & JP - A - 62297988

## Beschreibung

Die Erfindung betrifft eine Einrichtung zur berührungslosen Daten- und Energieübertragung mit einem stationären Teil und einem beweglichen Teil gemäß dem Oberbegriff des Anspruchs 1.

Eine derartige Einrichtung ist aus der DE-A-34 47 560 bekannt. Sie ist auch in der europäischen Patentanmeldung EP-A-466 946 (veröffentlicht am 22.01.92) insbesondere FIG 1 und FIG 2 und der dazugehörigen Beschreibung beschrieben.

Sie zeigt eine Einrichtung zur berührungslosen Daten- und Energieübertragung, bestehend aus einem stationären Teil (ST) mit einem Oszillator (OSC) zur kontaktlosen Leistungsübertragung mit Hilfe von einem Spulenpaar (L1a, L2a; L1b, L2b) an einem beweglichen Teil (BT), wobei die Schwingung des Oszillators (OSC) in eine Bezugsschwingung und eine Informationsschwingung aufgespalten ist und der Informationsschwingung in Abhängigkeit von den zu übertragenden Dakten (DT1) eine Phasenverschiebung gegenüber der Bezugsschwingung aufgezwungen wird, wobei diese phasenverschobene Schwingung über ein erstes Spulenpaar (L1b, L2b) bzw. (L1a, L2a) und die Bezugsschwingung über ein zweites Spulenpaar (L1a, L2a) bzw. (L1b, L2b) dem beweglichen Teil zugeführt wird, wobei im beweglichen Teil (BT) die übertragenen Schwingungen einer Demodulatorschaltung (DEMOD) zugeführt werden, die aus der Phasenverschiebung die Daten wiedergewinnt und wobei eine Datenübertragung vom beweglichen Teil (BT) zum stationären Teil (ST) durch Belastungsänderung erfolgt. Die Leistungsübertragung wird nur mit Hilfe eines Spulenpaars bewerkstelligt und die Datenübertragung vom beweglichen Teil zum stationären Teil nur durch Belastungsänderung an der Spule des beweglichen Teils, die nicht der Leistungsübertragung dient.

Um sicherzustellen, daß die Spulen des stationären Teils den Spulen des beweglichen Teiles zur Bildung von Spulenpaaren beliebig zuordnenbar sind und somit, wenn auch nicht gleichzeitig, über jede der beiden Spulen Energie oder Daten übertragen werden können, ist jeder der beiden Spulen des beweglichen Teils außer einer Gleichrichterschaltung zumindest jeweils das Stellglied eines Spannungsreglers und außerdem zumindest jeweils ein Schalter zugeordnet, der in Abhängigkeit von seiner Ansteuerung und der dadurch bewirkten Schalterstellung die Belastung des ihm zugeordneten Spulenpaars verändern kann. Es kann auch jeder der Spulen ein Spannungsregler und eine veränderbare Last zugeordnet sein. In allen dieser Fälle muß durch eine logische Verknüpfung sichergestellt sein, daß der für die Datenübertragung vom beweglichen Teil zum stationären Teil benötigte Amplitudenmodulator immer die Belastung des Spulenpaars verändert, das keinen Anteil an der Energieübertragung hat, dessen Spannungsregler bzw. Spannungsreglerstellglied folglich nicht aktivierbar ist, bzw. dem der Spannungsregler nicht nachgeschaltet ist.

Wenn die Spulen des beweglichen Teils die Spulen des stationären Teils beliebig koppelbar sein sollen und deshalb eine Demodulatorschaltung mit einer Schaltungseinheit zum Festlegen des Logikpegels des Signals vorgesehen ist, so kann diese Schaltungseinheit in gleicher Weise, in der sie den Logikpegel festlegt auch erkennen, an welcher der Spulen des beweglichen Teils die Bezugsschwingung und an welcher der Spulen des beweglichen Teils die in ihrer Phasenlage zur Bezugsschwingung veränderliche Informationsschwingung übertragen werden. Es wird bei einer solchen Einrichtung zur berührungslosen Daten- und Energieübertragung in Abhängigkeit von einem dieser Information enthaltenden Signal der Demodulatorschaltung durch eine logische Verknüpfung festgelegt, welche Spule des beweglichen Teils für die Datenübertragung vom beweglichen Teil zum stationären Teil eingesetzt wird und welche Spule für die Energieübertragung vorgesehen ist, wobei sichergestellt ist, daß die Datenübertragung vom beweglichen Teil zum stationären Teil mit Hilfe der Spule des beweglichen Teils erfolgt, die momentan nicht zur Energieübertragung eingesetzt ist. Um eine kontinuierliche Energieversorgung des beweglichen Teils sicherzustellen, wird hierbei die Bezugsschwingung übertragenden Spule einen Spannungsregler nachgeschaltet bzw. eine dieser Spule nachgeschaltete Spannungsregler aktiviert und an der Informationsschwingung übertragenen Spule des beweglichen Teils wird für die Datenübertragung vom beweglichen Teil zum stationären Teil die Belastung in Abhängigkeit der übertragenen Daten variiert.

Vorteil der obenbeschriebenen Anordnung besteht darin, daß die Einrichtung die Datenübertragung im Vollduplexverfahren steuern kann. Nachteil dieser Anordnung ist aber ein entsprechend hoher Schaltungsaufwand. Da derartige Einrichtungen hauptsächlich in Chipkarten und Chipschlüssel verwendet werden, ist eine Vollduplexfähigkeit nicht notwendig. Ein gleichzeitiges Senden von Daten vom beweglichen Teil und stationären Teil kommt in diesen Anwendungsfällen nur sehr selten vor, so daß ohne größere Zeitverluste beim Betrieb einer derartigen Einrichtung auf eine Vollduplexfähigkeit verzichtet werden kann.

Aufgabe der Erfindung ist es daher, eine Einrichtung zur berührungslosen Daten- und Energieübertragung anzugeben, welche eine möglichst einfache Anordnung zur Durchführung der Datenübertragung vom beweglichen Teil zum stationären Teil ermöglicht.

Diese Aufgabe wird durch den kennzeichnenden Teil des Anspruchs 1 gelöst. Weiterbildungen sind Kennzeichen der Unteransprüche.

Vorteil der Erfindung ist, daß durch Einschränkung auf das Halbduplexübertragungsverfahren die Modulator-Demodulatorschaltungen im stationären wie auch im beweglichen Teil erheblich einfacher ausgeführt werden können. Dadurch werden beide Teile einfacher integrierbar. Das Modulationsverfahren erlaubt, den Informationsübertrager nur mit einem Bruchteil der Energie des Leistungsübertragers zu betreiben, was zu einer vorteilhaften Leistungsbilanz im beweglichen Teil beiträgt.

Die Erfindung wird nachfolgend anhand von acht Figuren näher erläutert. Es zeigen
- FIG 1: ein Blockschaltbild der erfindungsgemäßen Anordnung mit einem stationären Teil und einem beweglichen Teil,
- FIG 2: ein Blockschaltbild einer weiteren erfindungsgemäßen Anordnung des beweglichen Teils,
- FIG 3: eine erste Ausführungsform der erfindungsgemäßen Anordnung gemäß FIG 1,
- FIG 4: eine zweite Ausführungsform der erfindungsgemäßen Anordnung gemäß FIG 1,
- FIG 5: eine dritte Ausführungsform der erfindungsgemäßen Anordnung gemäß FIG 2,
- FIG 6: eine vierte Ausführungsform der erfindungsgemäßen Anordnung gemäß FIG 2,
- FIG 7: eine fünfte Ausführungsform der erfindungsgemäßen Anordnung gemäß FIG 2, und
- FIG 8: eine sechste Ausführungsform der erfindungsgemäßen Anordnung gemäß FIG 2.

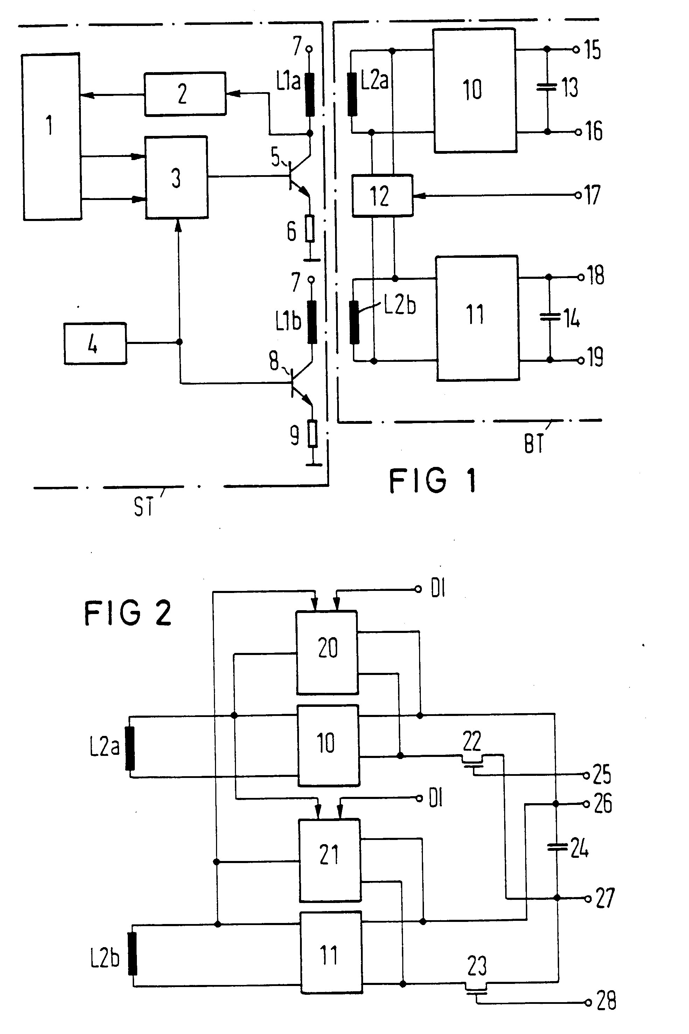

FIG 1 zeigt den prinzipiellen Aufbau einer erfindungsgemäßen Einrichtung zur berührungslosen Daten- und Energieübertragung. Sie zeigt den stationären Teil ausschnittsweise mit einer Steuerlogik 1, welche verschiedene Steuersignale erzeugen kann, die einem Modulator 3 zugeführt werden, dessen Ausgang mit dem Steuereingang eines Transistors 5 verbunden ist. Die Laststrecke des Transistors 5 ist in Reihe mit der Übertragungsspule L1a und einem Widerstand 6 zwischen Betriebsspannungsanschluß 7 und Masse geschaltet. Am Knotenpunkt der Ubertragungsspule L1a und der Laststrecke des Transistors 5 wird ein Signal ausgekoppelt, welches einem Demodulator 2 zugeführt wird. Dieser ist wiederum mit der Steuerlogik 1 verbunden. Weiterhin ist ein Oszillator 4 zur Energieerzeugung vorgesehen. Dessen Ausgangssignal wird zum einen dem Modulator 3 und zum anderen dem Basisanschluß eines zweiten Steuertransistor 8 zugeführt. Dessen Laststrecke ist ebenfalls in Reihe mit der zweiten Spule L1b und einem zweiten Widerstand 9 zwischen Betriebsspannungsanschluß 7 und Masse geschaltet ist.

Im beweglichen Teil befinden sich während des Betriebs der Anordnungen, örtlich gegenüber den im stationären Teil befindlichen Spulen L1a, L1b die Empfängerspulen L2a und L2b. Jeder dieser Spulen L2a, L2b ist eine Gleichrichtereinheit 10, 11 nachgeschaltet. Eine Modulatoreinheit 12 ist vorgesehen, welche vier Anschlüsse aufweist, die jeweils mit den Anschlüssen der beiden Spulen verbunden sind. Weiterhin ist ein Steuereingang an der Modulatoreinheit 12 vorgesehen. Jedes Gleichrichtermittel hat zwei Ausgänge 15, 16 bzw. 18, 19, denen jeweils ein Ladekondensator 13, 14 zugeordnet ist. Die Ausgänge der Gleichrichtermittel können aber auch parallel geschaltet werden, dann ist nur ein Ladekondensator nötig. Nachfolgende Schaltungsteile wie Demodulatoren, Spannungsregler sowie Prozessoren- und Speichereinheiten sind aus Übersichtlichkeitsgründen nicht dargestellt.

Die Modulatoreinheit 12 ermöglicht es direkt, einen Teil der Energie von der Energieübertragungsspule L2b auf die Datenübertragungsspule L2a zu schalten. Das Energieübertragungssignal wird dabei von einem am Anschluß 17 anliegenden Datensignal ausgetastet. Vorteil dieser Anordnung ist, daß keine Einheit notwendig ist, die erkennt, welche der beiden Spulen als Energieübertragungsspule und welche als Datenübertragungsspule fungiert, da zur Datenübertragung einfach ein Teil der über eine Spule empfangenen Energie über die jeweils andere Spule zurückgesendet wird. Die geringe Verkopplung zwischen Modulationsvorgang und Energieversorgung gewährleistet eine relativ geringe Spannungsschwankung während der Modulation.

FIG 2 zeigt eine weitere Möglichkeit einer halbduplexfähigen Datenübertragungseinheit im beweglichen Teil. So sind wiederum die zur Energieübertragung und Datenübertragung notwendigen Spulen L2a und L2b dargestellt. Der stationäre Teil ist nicht mehr abgebildet, entspricht aber dem in FIG 1 dargestellten. Jeder Spule ist wiederum ein Gleichrichtermittel 10, 11 nachgeschaltet und jedem Gleichrichtermittel ist eine Modulatoreinheit 20, 21 parallelgeschaltet, so daß die Eingänge des Modulators 20, 21 mit den Ausgängen des Gleichrichtermittels 10, 11 verschaltet sind und die Ausgangssignale der Modulatoren 20, 21 den Spulen zugeführt werden. Der erste Ausgang eines jeden Gleichrichtermittels 10, 11 ist direkt mit einem Anschluß eines Ladekondensators 24 verbunden. Die jeweils zweiten Ausgänge der Gleichrichtermittel 10, 11 sind über jeweils eine Laststrecke eines Schalttransistors 22, 23 mit dem zweiten Anschluß des Ladekondensators 24 verschaltet. Diese Transistoren 22, 23 dienen zum Abschalten desjenigen Teils von der Versorgungsspannung liefernden Einheit, die nicht an der Energieübertragung beteiligt ist. Die Anschlüsse des Ladekondensators 24 führen zu Anschlüssen 26 und 27, an denen die pulsierende Gleichspannung abgreifbar ist. Anschlüsse 25 und 28 sind vorgesehen, die zu den Steueranschlüssen der Schalttransistoren 22 und 23 führen. Das Datensignal wird jeweils über einen Anschluß DI den Modulatoren 20, 21 zugeführt. Schließlich wird das Signal einer jeden Spule dem jeweils der anderen Spule zugeordneten Modulator zugeführt. Die Einheit zum Erkennen der Datenübertragungsspule und der Energieübertragungsspule sowie zum Erzeugen der entsprechenden Signale für die Schalttransistoren 22, 23 ist nicht dargestellt.

Die im stationären Teil von einem Oszillator 4 erzeugte Trägerschwingung wird z. B. der Energieübertragungsspule L2b im beweglichen Teil BT zugeführt. Während einer Initialisierungszeit wird die Trägerschwingung im Modulator des stationären Teils unterdrückt. Dies erfolgt durch eine in FIG 1 dargestellte Steuerleitung der Steuerlogik 1. Deshalb kann im beweglichen Teil lediglich derjenige der Demodulatoren, der in den Figuren nicht dargestellt ist, im energieführenden Zweig Potential führen. Diese Information wird in der ebenfalls nicht dargestellten Steuerlogik des beweglichen Teils als Spulenlageinformation abgespeichert. Nach Ablauf der Initialisierungszeit kann der stationäre Teil an den beweglichen Teil Daten senden. Dies erfolgt indem der Modulator im stationären Teil z. B. die Trägerschwingung des Oszillators 4 austastet. Im beweglichen Teil kann am nicht dargestellten, dem Gleichrichtermittel 10, 11 nachgeschalteten Demodulator des Teils, der zur Datenübertragung dient, die gleichgerichtete und geglättete Trägerschwingung als Datensignal abgegriffen werden.

Nachfolgend sei angenommen, daß die Spule L2b zur Energieübertragung und die Spule L2a zur Datenübertragung dient. Die Umschaltung der Datenrichtung übernimmt in beiden Teilsystemen jeweils eine intellegente Steuerlogik. Sie kann den Modulator im stationären Teil ST über eines der Steuersignale sperren. Im beweglichen Teil BT werden zum Empfangen von Daten die Gleichrichtermittel sowie der nachgeschaltete Demodulator und der Modulator vom energieführenden Teil durch den Schalttransistor 22 abgekoppelt. Zum Senden vom beweglichen Teil BT zum stationären Teil ST wird im beweglichen Teil BT an der Energiespule L2b die Trägerschwingung ausgekoppelt und dem Modulator 20 des Datenzweiges zugeführt. Der Datenstrom, der an DI anliegt, tastet die Trägerschwingung aus. Die notwendige Übertragungsenergie wird nun über den Schalttransistor 22 (bzw. 23) als Teilenergie dem Ladekondensator 24 entnommen, der über die Gleichrichterbrücke 11 des Energiezweigs ständig aufgeladen wird. Am Ausgang des Demodulators 2 im stationären Teil ST, der z. B. aus einem Gleichrichter und einem Glättungskondensator bestehen kann, steht das empfangene Datensignal zur Verfügung.

Die geglättete Gleichspannung am Ladekondensator 24 kann in nachfolgenden Reglern zu einer stabilisierten Spannung weiter verarbeitet werden, um die weitere Schaltungsteile, wie z. B. Prozessoren und Speicher, die zum Betrieb einer Chipkarte oder eines Chipschlüssels notwendig sind, zu versorgen.

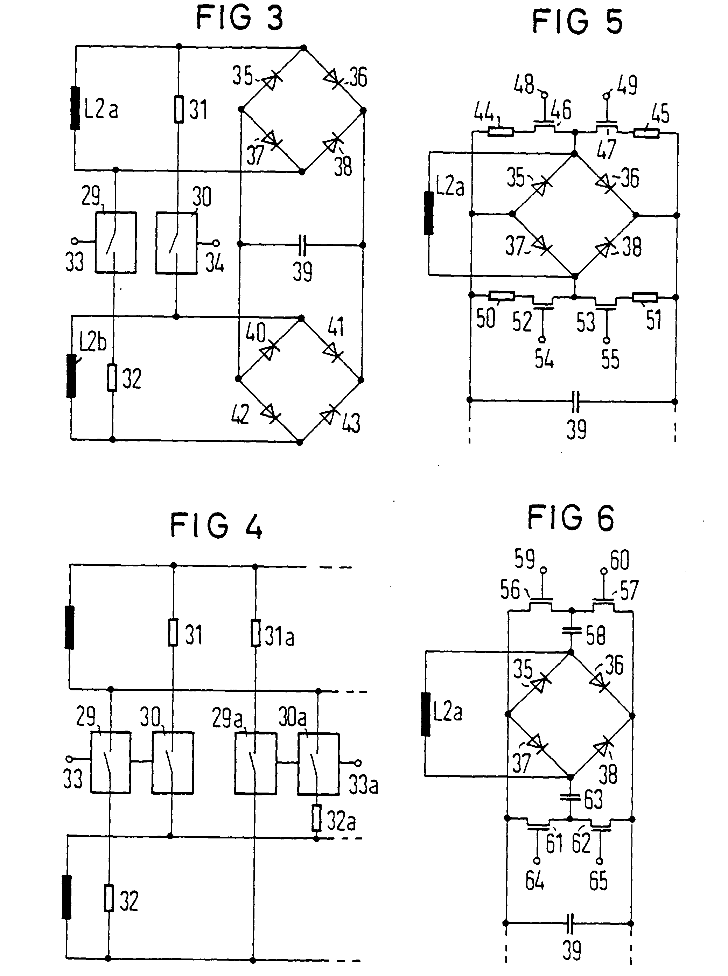

FIG 3 stellt eine erste Ausführungsform der in FIG 1 dargestellten prinzipiellen erfindungsgemäßen Anordnung dar. Es sind wieder nur die zur Datenübertragung vom beweglichen Teil BT an den stationären Teil ST notwendigen Schaltungselemente dargestellt. So ist die erste Spule L2a im beweglichen Teil mit einer Gleichrichtereinheit bestehend aus einem ersten Brückengleichrichter mit den Dioden 35 bis 38, dessen Ausgang mit dem Ladekondensator 39 verbunden ist, dargestellt. Die zweite Spule L2b ist ebenfalls an einen zweiten Brückengleichrichter bestehend aus den Dioden 40 bis 43 gekoppelt und sein Ausgang ist ebenfalls mit dem Ladekonsator 39 verschaltet. Die Datenübertragung wird durch zwei Halbleiterschaltelemente 29, 30 ermöglicht. Über diese Schaltelemente sind beide Spulen parallel miteinander verbunden. In Reihe zu den Halbleiterschaltelementen 29 und 30 sind jeweils ein Widerstand 31, 32 geschaltet. Mit 33 und 34 sind die Steuereingänge der Halbleiterschaltelemente gekennzeichnet.

An den Steuereingängen 33 und 34 liegt das jeweilige Datensignal, welches vom beweglichen Teil an den stationären Teil übertragen werden soll, an. Dadurch wird ein Teil der von einer Spule L2a oder L2b empfangenen Energie direkt auf die jeweilig andere Spule übertragen. Die Widerstände 31 und 32 können auch in den Laststrecken der Halbleiterschaltelemente 29, 30 verwirklicht werden. Eine besonders einfache Ausführung der in FIG 3 dargestellten Anordnung kann dadurch erreicht werden, daß nur ein Halbleiterschaltelement verwendet wird. Der andere Anschluß der Spule ist dann fest mit dem jeweilig anderen Anschluß der zweiten Spule verschaltet. In FIG 3 sind wiederum der Übersichtlichkeit halber keine Demodulatorschaltungen dargestellt. Diese müßten jeweils den Gleichrichtermitteln 35...38; 40...43 nach- oder vorgeschaltet werden. Die Ausgänge der beiden nicht dargestellten Demodulatorschaltungen könnten dann wieder zusammengeführt werden.

FIG 4 stellt eine zweite Ausführungsform gemäß dem Prinzipschaltbild aus FIG 1 dar. Die Schaltung ist gegenüber der in FIG 3 gezeigten um zwei Halbleiterschaltelemente 29a, 30a erweitert. Dabei verbinden die zusätzlichen Halbleiterschaltelemente die Anschlüsse der beiden Spulen L2a und L2b derart miteinander, daß die Anschlüsse der ersten Spule L2a mit den jeweiligen anderen Anschlüssen der zweiten Spule L2b verbunden wird. Den Laststrecken der Halbleiterschaltelemente 29a, 30a sind ebenfalls Widerstände 31a und 32a in Reihe geschaltet. Diese Widerstände können auch entfallen wenn die entsprechenden Signale an den Widerständen 31 und 32 abgegriffen werden. Auch hier können die Widerstände ganz entfallen, wenn die Widerstände in den Laststrecken der Schalttransistoren realisiert werden.

Am Steueranschluß 33a der beiden zusätzlichen Schalttransistoren und am Steueranschluß 33 der beiden Schalttransistoren 29, 30 muß ein zueinander invertiertes Signal anliegen. Das Signal kann dann so gewählt werden, daß eine Frequenzumsetzung bei der Datenübertragung entsteht. Auf diese Weise kann eine Verkopplung von Energie- und Übertragunsteil vermieden werden.

FIG 5 zeigt ein erstes Ausführungsbeispiel der erfindungsgemäßen Anordnung gemäß FIG 2. In FIG 5 ist nur eine Spule L2a und ihr zugehöriger Modulator dargestellt. Die zur Spule L2b gehörigen Schaltelemente sind identisch aufgebaut und deshalb aus Übersichtlichkeitsgründen nicht dargestellt. Die Spule L2a ist mit einem Gleichrichter, bestehend aus den Dioden 35...38 gemäß FIG 3 verbunden. Der Ausgang des Gleichrichters 35..38 ist wiederum mit einem Ladekondensator 39 verschaltet. An den Eingängen des Gleichrichters befinden sich jeweils die Laststrecken von zwei in Reihe geschalteten Halbleiterschaltelementen 46, 47 und 52, 53. Der Knotenpunkt einer jeden Reihenschaltung ist dabei jeweils mit einem Eingang des Gleichrichters bzw. mit einem Anschluß der Spule L2a verschaltet. Die Anschlüsse der Reihenschaltungen der Laststrecken der Halbleiterschaltelemente 46, 47 und 52, 53 sind über je einen Widerstand 44, 45, 50, 51 derart mit den Ausgängen des Gleichrichters 35...38 verschaltet, daß der Laststreckenanschluß am Halbleiterschaltelement 46 und der Laststreckenanschluß des Halbleiterschaltelements 52 über jeweils den Widerstand 44 und 50 mit dem ersten Eingang des Gleichrichters 35...38 verbunden sind und die Laststreckenanschlüsse der Transistoren 47 und 53 über die Widerstände 45 und 51 mit dem zweiten Ausgang des Gleichrichters 35...38. Die Widerstände 44, 45 und 50, 51 können auch entfallen, wenn sie z. B. in den Laststrecken der Halbleiterschaltelemente realisiert wird. Die Steuereingänge der Halbleiterschaltelemente sind mit Anschlüssen 48, 49, 54 und 55 verschaltet. An diesen Eingängen liegt das zur Datenübertragung notwendige Steuersignal an.

Die Modulation erfolgt folgendermaßen: Die Widerstände 44, 45 und 50, 51 begrenzen den Energiefluß zur Signalspule L2a bzw. L2b. Zur Übertragung eines Signales an die Spule L2a bzw. L2b werden die Halbleiterschaltelemente abwechselnd paarweise überkreuz geschlossen, womit die Spannung an der Spule periodisch umgepolt wird. Dies erfolgt z. B. durch Leitendschalten der Halbleiterschaltelemente 47 und 52 abwechselnd mit den Halbleiterschaltelementen 46 und 53. Die Zuordnung des Übertragungssignales zum Datensignal kann auf vielfältige Weise erfolgen. Z. B. durch Amplitudenmodulation oder durch Phasenmodulation oder durch Festlegung eines Zeitfensters, in welchem Bereiche für logische 0- und logische 1-Signale festgelegt sind.

Die in FIG 6 gezeigte zweite Ausführungsform einer erfindungsgemäßen Anordnung gemäß FIG 2 ist entsprechend FIG 5 aus einer Spule L2a, einem Gleichrichter 35...38 sowie einem Ladekondensator 39 aufgebaut. Es sind ebenfalls vier Halbleiterschaltelemente 56, 57 und 61, 62 vorgesehen. Die Laststrecken jeweils zweier Halbleiterschaltelemente 56, 57 und 61, 62 sind wiederum in Reihe geschaltet. Der Knotenpunkt einer jeden Reihenschaltung 56, 57 und 61, 62 ist über jeweils einen Kondensator 58, 63 mit den Eingängen des Gleichrichters 35...38 verschaltet. Jeweils ein Anschluß der Reihenschaltung der Halbleiterschaltelemente 56, 57 und 61, 62 ist mit je einem Ausgang des Gleichrichters 35...38 verbunden, so daß die Reihenschaltung der Halbleiterschaltelemente 56, 57 und 61, 62 parallelgeschaltet sind. Die Halbleiterschaltelemente 56, 57 und 61, 62 weisen wiederum Steueranschlüsse 59, 60 und 64, 65 auf.

Die beiden Kondensatoren 58 und 63 werden als Blindwiderständen verwendet. Die Elektroden der Kondensatoren liegen dabei wechselweise am positiven und negativen Potential. Dies wird dadurch erreicht, daß wiederum die Halbleiterschaltelemente 57, 61 und 56, 62 abwechselnd paarweise überkreuz geschlossen werden. Dies erfolgt entsprechend dem in FIG 5 beschriebenen Verfahren. So werden z. B. abwechselnd die Transistoren 57, 61 und die Transistoren 56, 62 leitend geschaltet.

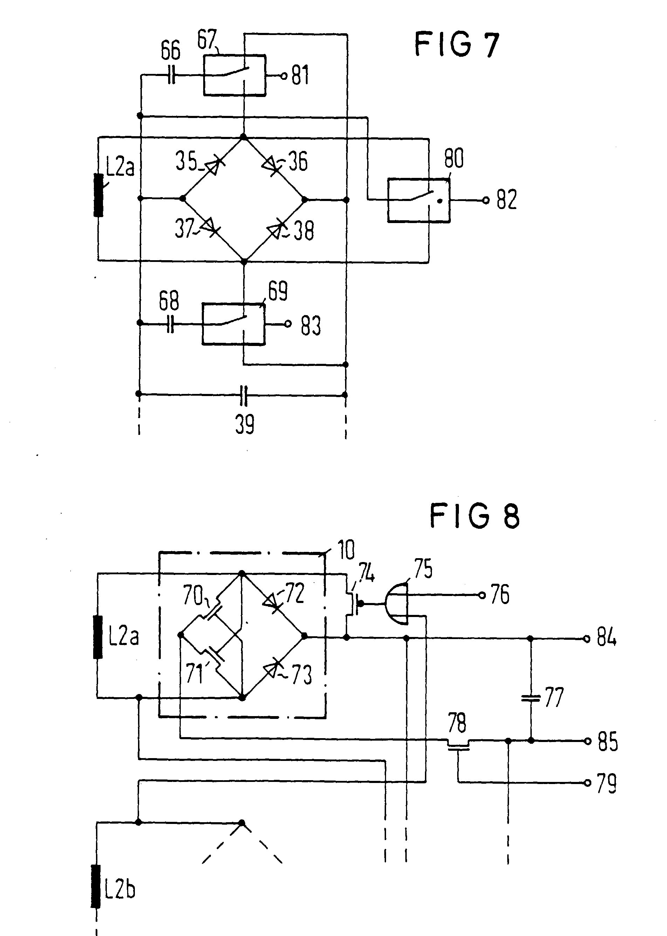

Eine dritte Ausführungsform der erfindungsgemäßen Anordnung gemäß FIG 2 ist in FIG 7 dargestellt. Spule L2a, Gleichrichter 35...38 und Ladekondensator 39 sind wiederum gemäß den FIG 5 und 6 ausgeführt und verschaltet. Drei Halbleiterschaltelemente 67, 69 und 80 sind vorgesehen und als Umschalter ausgebildet. Jeder Umschalter 67, 69 und 80 weist dabei zwei Umschaltkontakte und einen Mittelkontakt auf. Der Umschalter 80 muß gegenüber den anderen Umschaltern auch eine Mittelstellung aufweisen. Da derartige Umschalter aber meistens mit zwei Halbleiterschaltern realisiert werden, ergibt sich eine Möglichkeit der Mittelstellung durch Sperren beider Halbleiterschalter. Der Mittelkontakt des ersten Umschalters 67 ist über eine Kapazität 66 mit dem ersten Ausgang des Gleichrichters 35...38 verbunden. Ebenso ist der Mittenkontakt des zweiten Umschalters 69 über eine Kapazität 68 mit dem ersten Ausgang des Gleichrichters 35...38 verschaltet. Der Mittenkontakt des dritten Umschalters 88 ist direkt mit dem ersten Ausgang des Gleichrichters 35...38 verbunden. Der erste Umschaltkontakt des ersten Umschalters 67 und der zweite Umschaltkontakt des dritten Umschalters 80 sind mit dem ersten Eingang des Gleichrichters verschaltet. Weiterhin sind der zweite Umschaltkontakt des zweiten Umschalters 69 und der erste Umschaltkontakt des dritten Umschalters 80 mit dem zweiten Eingang des Gleichrichters 35...38 verschaltet. Der zweite Umschaltkontakt des ersten Umschalters 67 und der erste Umschaltkontakt des Umschalters 69 sind mit dem zweiten Ausgang des Gleichrichters 35...38 verbunden. Die als Umschalter ausgebildeten Halbleiterschaltelemente weisen wiederum Steueranschlüsse 81, 82 und 83 auf.

Die Kondensatoren 66 und 68 werden hier als sogenannte "Löffelkondensatoren" eingesetzt, wie dies aus "switched-capacitor"-Schaltungen bekannt ist. Sie liegen jeweils mit einer Elektrode auf festem Potential, wodurch unvermeidbare Substratkapazitäten bei der Integration ihre Wirkung noch vergrößern. An den Steueranschlüssen 81, 82 und 83 liegen wiederum Steuersignale an, so daß sich folgender Wirkungsablauf ergibt: Der Kondensator 66 wird über den Umschalter 67 aufgeladen, der Kondensator 68 ist dagegen über den Umschalter 69 mit der Spule L2a verbunden. Weiterhin verbindet der dritte Umschalter 80 den ersten Ausgangsanschluß des Gleichrichters 35...38 mit dem ersten Eingang des Gleichrichters 35...38, so daß sich die Spannung am Kondensator 68 in die Spule L2a entladen kann. Daraufhin werden alle drei Umschalter durch ein entsprechendes Steuersignal umgeschaltet, wodurch sich der Kondensator 66 im Spulenlastkreis entladen kann, der Kondensator 68 mit der Betriebsspannung, die am Kondensaotr 39 anliegt, aufgeladen wird. Der Vorgang wiederholt sich dann entsprechend.

Auf diese Weise geben die Kondensatoren 66 und 68 wie kleine Löffel Ladung in wechselnder Stromrichtung an die Spule L2a ab. Durch entsprechende Steuerung der Schalter wie bereits oben beschrieben, können die verschiedensten Übertragungsverfahren realisiert werden.

Die in den FIG 3 bis 7 dargestellten Halbleiterschaltelemente können in MOS oder bipolarer Technik ausgeführt werden. Falls notwendig, können alle Laststrecken hochohmig ausgebildet sein.

FIG 8 zeigt ebenfalls, wie bereits die FIG 5, 6 und 7, nur einen Teil der symmetrisch aufgebauten erfindungsgemäßen Modulators gemäß FIG 2. Dieses vierte Ausführungsbeispiel zeigt wiederum die Spule L2a, die an einen Gleichrichter 10 angeschlossen ist. Der Gleichrichter 10 ist wiederum als Brückengleichrichter ausgebildet, wobei er zwei in Reihe geschaltete Dioden 72 und 73 enthält, deren Katoden miteinander verbunden sind. Weiterhin sind zwei MOS-Transistoren 70 und 71 vorgesehen, deren Laststrecken ebenfalls in Reihe geschaltet sind.

Die Reihenschaltung der Laststrecken der MOS-Transistoren 70 und 71 ist dabei parallel zur Reihenschaltung der Dioden 72, 73 geschaltet. Die parallelgeschalteten Anschlüsse der Reihenschaltungen stellen dabei den Eingang des Gleichrichters dar, die Knotenpunkte der Laststrecken bzw. Diodenstrecken den Ausgang des Gleichrichters. Die Steueranschlüsse der MOS-Transistoren 70 und 71 sind jeweils mit dem Anschluß der Reihenschaltung der beiden MOS-Transistoren 70, 71 verbunden, der mit der Laststrecke des jeweils anderen MOS-Transistors verbunden ist. Parallel zur ersten Diode 72 ist ein weiterer MOS-Transistor 74, der Teil des Modulators ist, geschaltet. Die Ausgänge des Gleichrichters 10 sind wiederum mit einem Ladekondensator 77 verbunden. Der Knotenpunkt der Reihenschaltung der MOS-Transistoren 70 und 71 des Gleichrichters ist dabei über die Laststrecke eines weiteren MOS-Transistors 78 mit dem Kondensator 77 verschaltet. Dies entspricht genau der in FIG 2 dargestellten Anordnung. Das direkt an der Spule anliegende Signal eines jeden Zweigs wird ausgekoppelt und dem jeweils anderen Zweig zugehörigen Modulator zugeführt.

In FIG 8 ist die Auskopplung für beide Spulen dargestellt, wohingegen der Anschluß an den zur Spule L2b zugehörigen Modulators nicht näher dargestellt ist. Dieser entspricht genau dem zur Spule L2a zugehörigen Modulator. Das ausgekoppelte Signal der Spule L2b wird hier dem ersten Eingang eines Oder-Gatters 75 zugeführt. Am zweiten Eingang des Oder-Gatters liegt das über den Anschluß 76 zugeführte Datensignal an. Der Ausgang des Oder-Gatters 75 ist mit dem Steuereingang des MOS-Transistors 74 verschaltet.

Über das Oder-Gatter 75 wird die Schwingung des Energiesignals, welches z. B. über die Spule L2b übertragen wird, vom Datensignal, welches am Anschluß 76 anliegt ausgetastet. Nach Ablauf einer Initialisierungszeit kann der bewegliche Teil der Daten an den stationären Teil senden. Dazu sei wieder angenommen, daß über die Spule L2b die Energieübertragung erfolgt und über die Spule L2a die Datenübertragung. Zur Datenübertragung vom beweglichen Teil wird nun zuerst der Transistor 78 über das am Anschluß 79 anliegende Steuersignal leitend geschaltet. Das Gatter 75 schaltet nun den Steuertransistor 74 entsprechend dem am Anschluß 76 anliegenden Datensignal, welches das von der Energieübertragungsspule gelieferte Signal austastet, leitend. Befindet sich der Transistor 74 im leitenden Zustand, so wird ein Teil der im Ladekondensator gespeicherten Energie der Spule L2a zugeführt. Der Strom fließt dann über den Schalttransistor 74 in die Spule L2a und zurück zum Ladekondensator 77 über den MOS-Transistor 71 und den Schalttransistor 78.

Alle dargestellten Anordnungen sind einfach integrierbar und insbesondere in Chipkarten bzw. Chipschlüsseln einsetzbar.

## Patentansprüche

1. Einrichtung zur berührungslosen Daten- und Energieübertragung mit einem stationären Teil (ST) und einem beweglichen Teil (BT) mit den Merkmalen:
- dem beweglichen Teil (BT) und dem stationären Teil (ST) sind jeweils mindestens eine Spule (L1a, L1b; L2a, L2b) zur Daten- bzw. Energieübertragung zugeordnet,
- die Spulen (L2a, L2b) des beweglichen Teils (BT) sind den Spulen (L1a, L1b) des stationären Teils (ST) beliebig zuordnenbar,
- ein Oszillator (4) im stationären Teil (ST) dient zur Energieübertragung,
- jeder Spule (L2a, L2b) im beweglichen Teil (BT) ist je ein Gleichrichtermittel (10, 11) nachgeschaltet,
- die Gleichrichtermittel (10, 11) sind mit einem die pulsierende Betriebsspannung führenden Ladekondensator (13, 14) verbunden, im beweglichen Teil (BT) sind Mittel (12, 20, 26) zur Datenübertagung vom beweglichen Teil (BT) zum stationären Teil vorgesehen (ST),
**dadurch gekennzeichnet**, daß
- jeweils ein Spulenpaar (L1b, L2b; L1b, L2a) zur Energieübertragung und ein Spulenpaar (L1a, L2a; L1a, L2b) zur Datenübertragung dient,
- und die Mittel (12; 20, 21) zur Datenübertragung einen Teil der über die jeweilige Spule (L2a; L2b) empfangenen Energie mit dem Datensignal entsprechend moduliert über die andere Spule (L2b; L2a) zurücksenden.

2. Einrichtung nach Anspruch 1,
**dadurch gekennzeichnet** , daß
- im beweglichen Teil (BT) die Spule (L2b; L2a) zur Energieübertragung und die Spule (L2a; L2b) zur Datenübertragung über die Laststrecke mindestens eines steuerbaren Halbleiterbauelements (29, 30) miteinander verbunden sind und dem Steuereingang des steuerbaren Halbleiterbauelements (29, 30) das zu sendende Datensignal zugeführt wird.

3. Einrichtung nach Anspruch 2,
**dadurch gekennzeichnet**, daß
jeder Anschluß der Spule (L2b; L2a) zur Energieübertragung über jeweils ein steuerbares Halbleiterbauelement (30, 33, 30a, 33a) mit den beiden Anschlüssen der Spule (L2a; L2b) zur Datenübertragung verbunden ist.

4. Einrichtung nach Anspruch 2 oder 3,
**dadurch gekennzeichnet**, daß
jeweils ein Widerstand (31, 32) in Reihe zur Laststrecke des steuerbaren Halbleiterbauelements (29, 30; 29a, 30a) geschaltet ist.

5. Einrichtung nach Anspruch 2 oder 3,
**dadurch gekennzeichnet**, daß
die Laststrecken der Halbleiterbauelemente (29, 30; 29a, 30a) hochohmig ausgebildet sind.

6. Einrichtung nach Anspruch 1,
**dadurch gekennzeichnet**, daß
jeweils ein Modulator (20, 21) vorgesehen ist, der jeweils einer Spule im beweglichen Teil (BT) zugeordnet ist, der die gleichgerichtete Betriebsspannung mit dem vom Datensignal ausgetasteten Energiesignal moduliert der Spule (L2a; L2b) zur Datenübertragung zuführt.

7. Einrichtung nach Anspruch 6,
**dadurch gekennzeichnet**, daß
die Gleichrichtermittel folgende Merkmale aufweisen:
- zwei in Reihe geschaltete Dioden (72, 73) sind vorgesehen, deren Katoden miteinander verbunden sind,
- zwei MOS-Transistoren (71, 71) sind vorgesehen, deren Laststrecke in Reihe geschaltet sind, wobei die Reihenschaltung parallel zur Reihenschaltung der Dioden (72, 73) geschaltet ist,
- die Gateanschlüsse der MOS-Transistoren (70, 71) sind jeweils mit dem Anschluß der Reihenschaltung der beiden MOS-Transistoren (70, 71) verbunden, der nicht mit der Laststrecke des zugehörigen MOS-Transistors (70, 71) verbunden ist,
- die Knotenpunkte der beiden Reihenschaltungen sind mit dem Betriebsspannung führenden Ladekondensator (77) verbunden, der Modulator folgende Merkmale aufweist :
- ein Oder-Gatter (75) vorgesehen ist, dessem ersten Eingang das Datensignal und dessem zweiten Eingang das von der Energieübertragungsspule (L2b; L2a) ausgekoppelte Energiesignal zugeführt wird,
- der Ausgang des Oder-Gatters (75) mit dem Steuereingang eines MOS-Transistors (74) verbunden ist,
- die Laststrecke des MOS-Transistors (74) parallel zu einem der beiden Dioden (72, 73) der Gleichrichtermittel (10; 11) geschaltet ist.

8. Einrichtung nach einem der vorhergehenden Ansprüche
**dadurch gekennzeichnet**, daß
mindestens ein Ausgang eines Gleichrichtermittels (10, 11) über die Laststrecke eines MOS-Transistors (22, 23; 78) mit dem Ladekondensator (24; 77) verbunden ist.

9. Einrichtung nach Anspruch 6,
**dadurch gekennzeichnet**, daß
der Modulator folgende Merkmale aufweist:
- vier Halbleiterschaltelemente (46, 47, 54, 55) sind vorgesehen,
- die Laststrecken von jeweils zwei der Halbleiterschaltelemente (46, 47; 52, 53) sind in Reihe geschaltet,
- der Knotenpunkt der Reihenschaltung ist mit jeweils einem Eingang der Gleichrichtermittel (35...38) verbunden,
- die Anschlüsse je einer Reihenschaltung von Halbleiterschaltelementen (46, 47; 52, 53) sind jeweils über einen Widerstand (44, 45, 50, 51) mit jeweils einem Ausgang der Gleichrichtermittel (35...38) verbunden,
- den Steueranschlüssen (48, 49) der Halbleiterschaltelemente (46, 47) der ersten Reihenschaltung werden abwechselnd das Steuersignal und das invertierte Steuersignal und den Steueranschlüssen (54, 55) der Halbleiterschaltelement (52, 53) der zweiten Reihenschaltung das invertierte Steuersignal und das Steuersignal zugeführt, so daß die Spule zur Datenübertragung abwechselnd mit der positiven bzw. negativen Spannung am Ladekondensator (39) beaufschlagt wird.

10. Einrichtung nach Anspruch 5,
**dadurch gekennzeichnet,** daß
der Modulator folgende Merkmale aufweist:
- vier Halbleiterschaltelemente (56, 57, 61, 62) sind vorgesehen,
- jeweils zwei der Halbleiterschaltelemente (56, 57; 61, 62) sind in Reihe geschaltet,
- der Knotenpunkt der Reihenschaltung ist jeweils über einem Kondensator (58, 63) mit jeweils einem Eingang der Gleichrichtermittel (35...38) verbunden,
- die Anschlüsse je einer Reihenschaltung von Halbleiterschaltelementen (56, 57; 61, 62) sind mit jeweils einem Ausgang der Gleichrichtermittel (35...38) verbunden,
- den Steueranschlüssen (59, 60) der Halbleiterschaltelemente (56, 57) der ersten Reihenschaltung werden abwechselnd das Steuersignal und das invertierte Steuersignal und den Steueranschlüssen (64, 65) der Halbleiterschaltelemente (61, 62) der zweiten Reihenschaltung das invertierte Steuersignal und das Steuersignal zugeführt, so daß die Spule (L2a; L2b) zur Datenübertragung abwechselnd mit der positiven bzw. negativen Spannung am Ladekondensator (39) beaufschlagt wird.

11. Einrichtung nach Anspruch 5,
**dadurch gekennzeichnet,** daß
der Modulator folgende Merkmale aufweist:
- ein erstes und ein zweites Halbleiterschaltelement (67, 69) ist vorgesehen,
- die Halbleiterschaltelemente (67, 69) sind als Umschalter ausgebildet,
- der erste Ausgang der Gleichrichtermittel (35...38) ist jeweils über einen Kondensator (66, 68) mit der Laststrecke je eines Halbleiterschaltelements (67, 69) verbunden,
- die jeweils ersten Umschaltanschlüsse der Halbleiterschaltelemente (67, 69) sind mit den Eingängen der Gleichrichtermittel (35...38) verbunden und die jeweils zweiten Umschaltanschlüsse der Halbleiterschaltelemente (67, 69) sind mit dem zweiten Ausgang der Gleichrichtermittel (35...38) verbunden,
- ein drittes Halbleiterschaltelement (80) ist vorgesehen, daß als Umschalter ausgebildet ist und eine neutrale Mittelstellung aufweist,
- die Laststrecke des dritten Halbleiterschaltelements (80) ist mit dem ersten Ausgang der Gleichrichtermittel (35...38) verbunden,
- die Umschaltanschlüsse des dritten Halbleiterschaltelements (80) sind jeweils mit den Eingängen der Gleichrichtermittel verbunden sind.

## Claims

1. Device for contactless data and energy transmission, having a stationary part (ST) and a movable part (BT), having the features:
- at least one coil (L1a, L1b; L2a, L2b) for data or energy transmission are in each case assigned to the movable part (BT) and to the stationary part (ST),
- the coils (L2a, L2b) of the movable part (BT) can be assigned arbitrarily to the coils (L1a, L1b) of the stationary part (ST),
- an oscillator (4) in the stationary part (ST) is used for energy transmission,
- one rectifier means (10, 11) is connected downstream of each coil (L2a, L2b) in the movable part (BT),
- the rectifier means (10, 11) are connected to a charge capacitor (13, 14) carrying the pulsating operating voltage,
- means (12, 20, 26) for data transmission from the movable part (BT) to the stationary part (ST) are provided in the movable part (BT),
characterized in that, in each case one coil pair (L1b, L2b; L1b, L2a) is used for energy transmission and one coil pair (L1a, L2a; L1a, L2b) is used for data transmission, and the means (12; 20, 21) for data transmission return a portion of the energy received via the respective coil (L2a; L2b), correspondingly modulated with the data signal, via the other coil (L2b; L2a).

2. Device according to Claim 1, characterized in that
- in the movable part (BT), the coil (L2b; L2a) for energy transmission and the coil (L2a; L2b) for data transmission are connected to one another via the load path of at least one controllable semiconductor component (29, 30) and the data signal to be transmitted is fed to the control input of the controllable semiconductor component (29, 30).

3. Device according to Claim 2, characterized in that each terminal of the coil (L2b; L2a) for energy transmission is in each case connected via a controllable semiconductor component (30, 33, 30a, 33a) to the two terminals of the coil (L2a; L2b) for data transmission.

4. Device according to Claim 2 or 3, characterized in that a resistor (31, 32) is in each case connected in series with the load path of the controllable semiconductor component (29, 30; 29a, 30a).

5. Device according to Claim 2 or 3, characterized in that the load paths of the semiconductor components (29, 30; 29a, 30a) are designed to have high impedance.

6. Device according to Claim 1, characterized in that a modulator (20, 21), in each case assigned to a coil in the movable part (BT), is in each case provided and feeds the rectified operating voltage, modulated with the energy signal blanked out from the data signal, to the coil (L2a; L2b) for data transmission.

7. Device according to Claim 6, characterized in that the rectifier means have the following features:
- two series-connected diodes (72, 73) are provided, the cathodes of which are connected to one another,
- two MOS transistors (70, 71) are provided, the load paths of which are connected in series, the series circuit being connected in parallel with the series circuit consisting of the diodes (72, 73),
- the gate electrodes of the MOS transistors (70, 71) are in each case connected to that terminal of the series circuit consisting of the two MOS transistors (70, 71) which is not connected to the load path of the associated MOS transistor (70, 71),
- the node points of the two series circuits are connected to the charge capacitor (77) carrying the operating voltage,
the modulator has the following features:
- an OR gate (75) is provided, the first input of which has the data signal fed to it and the second input of which has fed to it the energy signal extracted from the energy transmission coil (L2b; L2a),
- the output of the OR gate (75) is connected to the control input of an MOS transistor (74),
- the load path of the MOS transistor (74) is connected in parallel with one of the two diodes (72, 73) of the rectifier means (10; 11).

8. Device according to one of the preceding claims, characterized in that at least one output of the rectifier means (10, 11) is connected via the load path of an MOS transistor (22, 23; 78) to the charge capacitor (24; 77).

9. Device according to Claim 6, characterized in that the modulator has the following features:
- four semiconductor switching elements (46, 47, 54, 55) are provided,
- the load paths of each pair of the semiconductor switching elements (46, 47; 52, 53) are connected in series,
- the node point of the series circuit is in each case connected to an input of the rectifier means (35...38),
- the terminals of each series circuit consisting of semiconductor switching elements (46, 47; 52, 53) are in each case connected via a resistor (44, 45, 50, 51) to one output of the rectifier means (35...38) in each case,
- the control electrodes (48, 49) of the semiconductor switching elements (46, 47) of the first series circuit alternately have fed to them the control signal and the inverted control signal, and the control electrodes (54, 55) of the semiconductor switching element (52, 53) of the second series circuit has the inverted control signal and the control signal alternately fed to it, so that the coil for data transmission alternately has the positive and negative voltages across the charge capacitor (39) applied to it.

10. Device according to Claim 5, characterized in that the modulator has the following features:
- four semiconductor switching elements (56, 57; 61, 62) are provided,
- each pair of the semiconductor switching elements (56, 57; 61, 62) are connected in series,
- the node point of the series circuit is in each case connected via a capacitor (58, 63) to an input of the rectifier means (35...38) in each case,
- the terminals of each series circuit consisting of semiconductor switching elements (56, 57; 61, 62) are in each case connected to an output of the rectifier means (35...38),
- the control electrodes (59, 60) of the semiconductor switching elements (56, 57) of the first series circuit alternately have the control signal and the inverted control signal supplied to them, and the control electrodes (64, 65) of the semiconductor switching elements (61, 62) of the second series circuit alternately have the inverted control signal and the control signal fed to them, so that the coil (L2a; L2b) for data transmission alternately has the positive and negative voltages across the charge capacitor (39) applied to it.

11. Device according to Claim 5, characterized in that the modulator has the following features:
- a first and a second semiconductor switching element (67, 69) are provided,
- the semiconductor switching elements (67, 69) are designed as changeover switches,
- the first output of the rectifier means (35...38) is in each case connected via a capacitor (66, 68) to the load path of each semiconductor switching element (67, 69),
- the respective first changeover terminals of the semiconductor switching elements (67, 69) are connected to the inputs of the rectifier means (35...38), and the respective second changeover terminals of the semiconductor switching elements (67, 69) are connected to the second output of the rectifier means (35...38),
- a third semiconductor switching element (80) is provided, which is designed as a changeover switch and has a neutral central position,
- the load path of the third semiconductor switching element (80) is connected to the first output of the rectifier means (35...38),
- the changeover terminals of the third semiconductors switching element (80) are in each case connected to the inputs of the rectifier means.

## Revendications

1. Dispositif de transmission d'énergie et de données sans contact, avec une partie fixe (ST) et une partie mobile (BT), ayant les caractéristiques :
- à chaque fois au moins une bobine (L1a, L1b ; L2a, L2b) pour la transmission d'énergie et pour la transmission de données est associée à la partie mobile (BT) et à la partie fixe (ST),
- les bobines (L2a, L2b) de la partie mobile (BT) peuvent être associées de manière quelconque aux bobines (L1a, L1b) de la partie fixe (ST),
- un oscillateur (4) dans la partie fixe (ST) sert à la transmission d'énergie,
- un moyen formant redresseur (10, 11) est branché en aval de chaque bobine (L2a, L2b) dans la partie mobile (BT),
- les moyens formant redresseurs (10, 11) sont reliés à un condensateur de lissage (13, 14) conduisant la tension de fonctionnement ondulée,
- dans la partie mobile (BT), des moyens (12, 20, 21) sont prévus pour la transmission de données de la partie mobile (BT) à la partie fixe (ST),
caractérisé par le fait que
- à chaque fois une paire de bobines (L1b, L2b ; L1b, L2a) sert à la transmission d'énergie et une paire de bobines (L1a, L2a ; L1a, L2b) sert à la transmission de données et les moyens (12 ; 20, 21) pour la transmission de données renvoient une partie de l'énergie reçue par la bobine respective (L2a ; L2b) avec le signal de données, de manière modulée en conséquence, par l'autre bobine (L2b ; L2a).

2. Dispositif selon la revendication 1,
caractérisé par le fait que
- dans la partie mobile (BT), la bobine (L2b ; L2a) destinée à la transmission d'énergie et la bobine (L2a ; L2b) destinée à la transmission de données sont reliées ensemble par l'intermédiaire de la voie de charge d'au moins un composant à semi-conducteurs (29, 30) pouvant être commandé et le signal de données à émettre est envoyé à l'entrée de commande du composant à semi-conducteurs (29, 30) pouvant être commandé.

3. Dispositif selon la revendication 2,
caractérisé par le fait que
chaque borne de la bobine (L2b ; L2a) destinée à la transmission d'énergie est reliée par l'intermédiaire d'un composant à semi-conducteurs (30, 33, 30a, 33a) pouvant être commandé aux deux bornes de la bobine (L2a ; L2b) destinée à la transmission de données.

4. Dispositif selon la revendication 2 ou 3,
caractérisé par le fait que
à chaque fois une résistance (31, 32) est branchée en série avec la voie de charge du composant à semi-conducteurs (29, 30 ; 29a, 30a) pouvant être commandé.

5. Dispositif selon la revendication 2 ou 3,
caractérisé par le fait que
les voies de charge des composants à semi-conducteurs (29, 30 ; 29a, 30a) sont construites avec une forte valeur ohmique.

6. Dispositif selon la revendication 1,
caractérisé par le fait que
à chaque fois un modulateur (20, 21) est prévu, lequel modulateur est associé à une bobine dans la partie mobile (BT) et envoie la tension de fonctionnement redressée avec le signal d'énergie extrait du signal de données, de manière modulée, à la bobine (L2a ; L2b) destinée à la transmission de données.

7. Dispositif selon la revendication 6,
caractérisé par le fait que
les moyens formant redresseurs présentent les caractéristiques suivantes :
- deux diodes (72, 73) branchées en série sont prévues et leurs cathodes sont reliées ensemble,
- deux transistors MOS (70, 71) sont prévus, leurs voies de charge étant branchées en série, le circuit série étant branché en parallèle avec le circuit série des diodes (72, 73),
- les bornes de grille des transistors MOS (70, 71) sont reliées à chaque fois à la borne du circuit série des deux transistors MOS (70, 71) qui n'est pas reliée à la voie de charge du transistor MOS (70, 71) associé,
- les points de jonction des deux circuits série sont reliés au condensateur de lissage (77) conduisant la tension de fonctionnement,
le modulateur présentant les caractéristiques suivantes :
- une porte OU (75) est prévue, sa première entrée recevant le signal de données et sa seconde entrée recevant le signal d'énergie extrait de la bobine de transmission d'énerqie (L2b ; L2a),
- la sortie de la porte OU (75) est reliée à l'entrée de commande d'un transistor MOS (74),
- la voie de charge du transistor MOS (74) est branchée en parallèle avec une des deux diodes (72, 73) des moyens formant redresseurs (10 ; 11).

8. Dispositif selon l'une des revendications précédentes,
caractérisé par le fait que
au moins une sortie d'un moyen formant redresseur (10, 11) est reliée par l'intermédiaire de la voie de charge d'un transistor MOS (22, 23 ; 78) au condensateur de lissage (24 ; 77).

9. Dispositif selon la revendication 6,
caractérisé par le fait que
le modulateur présente les caractéristiques suivantes :
- quatre éléments de commutation à semi-conducteurs (46, 47, 52, 53) sont prévus,
- les voies de charge de deux des éléments de commutation à semi-conducteurs (46, 47 ; 52, 53) à chaque fois sont branchées en série,
- le point de jonction du circuit série est relié à chaque fois à une entrée du moyen formant redresseur (35 à 38),
- les bornes de chaque circuit série composé d'éléments de commutation à semi-conducteurs (46, 47 ; 52, 53) sont reliées à chaque fois par l'intermédiaire d'une résistance (44, 45, 50, 51) à une sortie du moyen formant redresseur (35 à 38),
- les bornes de commande (48, 49) des éléments de commutation à semi-conducteurs (46, 47) du premier circuit série reçoivent en alternance le signal de commande et le signal de commande inversé et les bornes de commande (54, 55) des éléments de commutation à semi-conducteurs (52, 53) du second circuit série reçoivent en alternance le signal de commande inversé et le signal de commande, de sorte que la bobine destinée à la transmission de données reçoit en alternance la tension positive ou négative présente au condensateur de lissage (39).

10. Dispositif selon la revendication 5,
caractérisé par le fait que
le modulateur présente les caractéristiques suivantes :
- quatre éléments de commutation à semi-conducteurs (56, 57, 61, 62) sont prévus,
- à chaque fois deux des éléments de commutation à semi-conducteurs (56, 57 ; 61, 62) sont branchés en série,
- le point de jonction du circuit série est relié à chaque fois par l'intermédiaire d'un condensateur (58, 63) à une entrée du moyen formant redresseur (35 à 38),
- les bornes de chaque circuit série composé d'éléments de commutation à semi-conducteurs (56, 57 ; 61, 62) sont reliées à chaque fois à une sortie du moyen formant redresseur (35 à 38),
- les bornes de commande (59, 60) des éléments de commutation à semi-conducteurs (56, 57) du premier circuit série reçoivent en alternance le signal de commande et le signal de commande inversé et les bornes de commande (64, 65) des éléments de commutation à semi-conducteurs (61, 62) du second circuit série reçoivent en alternance le signal de commande inversé et le signal de commande, de sorte que la bobine (L2a ; L2b) destinée à la transmission de données reçoit en alternance la tension positive ou négative présente au condensateur de lissage (39).

11. Dispositif selon la revendication 5,
caractérisé par le fait que
le modulateur présente les caractéristiques suivantes :
- un premier et un second élément de commutation à semi-conducteurs (67, 69) sont prévus,
- les éléments de commutation à semi-conducteurs (67, 69) sont conçus comme des commutateurs,
- la première sortie du moyen formant redresseur (35 à 38) est reliée à chaque fois par l'intermédiaire d'un condensateur (66, 68) à la voie de charge d'un élément de commutation à semi-conducteurs (67, 69),
- les premières bornes de commutation des éléments de commutation à semi-conducteurs (67, 69) sont reliées aux entrées du moyen formant redresseur (35 à 38) et les secondes bornes de commutation des éléments de commutation à semi-conducteurs (67, 69) sont reliées à la seconde sortie du moyen formant redresseur (35 à 38),
- un troisième élément de commutation à semi-conducteurs (80) est prévu, qui est conçu comme un commutateur et comporte une position centrale neutre,
- la voie de charge du troisième élément de commutation (80) est reliée à la première sortie du moyen formant redresseur (35 à 38),
- les bornes de commutation du troisième élément de commutation à semi-conducteurs (80) sont reliées à chaque fois aux entrées du moyen formant redresseur.
